# EUROPÄISCHE PATENTSCHRIFT

(11) **EP 3 054 056 B1**
(45) Veröffentlichungstag und Bekanntmachung des Hinweises auf die Patenterteilung: **26.10.2022**
(21) Anmeldenummer: 16000231.7
(22) Anmeldetag: 01.02.2016
(51) Int. Cl.: E03C 1/04, E03C 1/05

(54) **SANITÄRARMATUR**
SANITARY FITTING
ROBINETTERIE

(30) Priorität: 03.02.2015 DE 102015001208
(43) Veröffentlichungstag der Anmeldung: 10.08.2016
(73) Patentinhaber: ORAS OY, 26100 Rauma (FI)
(72) Erfinder: TOIVONEN, Ari, 27100 Eurajoki (FI); RINNE, Veli, 26200 Rauma (FI)
(74) Vertreter: Ostertag & Partner Patentanwälte mbB

(56) Entgegenhaltungen:
- EP-A1- 2 692 955
- DE-A1-102004 041 786
- DE-B3- 10 320 636
- US-A1- 2014 261 767

## Beschreibung

### HINTERGRUND DER ERFINDUNG

### 1. Gebiet der Erfindung

Die Erfindung betrifft eine Sanitärarmatur mit
a) einer Mischeinrichtung, die über ein Kaltwasser-Ventil mit einem Kaltwasseranschluss, über ein Warmwasser-Ventil mit einem Warmwasseranschluss sowie mit einem Auslauf verbunden ist,
b) einem Betätigungselement, das zum Ändern der Wassertemperatur des am Auslauf bereitgestellten Wassers mechanisch auf die Mischeinrichtung einwirkt,
c) einem Auslöseelement und
d) einer elektrischen Steuereinrichtung, die mit dem Kaltwasser-Ventil, Warmwasser-Ventil und dem Auslöseelement verbunden ist, um im Bedarfsfall die Wasserabgabe auszulösen.

Die Erfindung betrifft ferner ein Ansteuerungsverfahren für eine Sanitärarmatur.

### 2. Beschreibung des Standes der Technik

In jüngster Zeit werden an sanitären Anlagen wie beispielsweise Waschbecken, Duschen und Badewannen oder an Küchenzeilen zunehmend elektrische Sanitärarmaturen verwendet, die über elektrische Bedienelemente betätigt werden.

Diese Sanitärarmaturen weisen im Allgemeinen einen Auslöseknopf auf, der über eine oder mehrere elektrisch gesteuerte Magnetventile die Wasserabgabe der Sanitärarmatur für einen bestimmten Zeitraum aktiviert.

Aus der US 2014/0261767 A1 ist eine elektrische betätigte Sanitärarmatur bekannt, bei welcher mithilfe eines Hebels über ein mechanisches Ventil eine Wassertemperatur vorgegeben werden kann. Der Auslauf des mechanischen Ventils wird über ein elektrisches Ventil gesteuert, das mit einem Infrarot- oder Kapazitivsensor ausgelöst wird.

Aus der DE 103 20 636 B3 ist ein Wasserhahn bekannt, bei welchem mithilfe einer drehbaren Ventilstange die Wassertemperatur gesteuert werden kann. Zur Wasserabgabe wird ein Elektromagnetventil angesteuert, welches einen Wasserauslassdurchgang freigibt.

Nachteilig an diesen bekannten elektrisch betätigten Sanitärarmaturen ist, dass häufig nur ein einzelner Modus mit einer vorgegeben Wassertemperatur aktiviert wird.

Ferner ist aus der EP 2 692 955 A1 ein elektronischer Betätigungsschalter für Wasserarmaturen bekannt, welcher mithilfe von Magneten und Hallsensoren arbeitet und mit welchem durch Drehung die Wasserarmatur in unterschiedliche Betätigungszustände versetzt werden kann.

Aus der DE 2004 041 786 A1 ist eine Sanitärarmatur bekannt, bei welcher ein erster Näherungsschalter ein Wasserflussventil öffnet und ein zweiter Näherungsschalter an einem mechanischen Temperierhebel angeordnet ist, um zu erkennen, ob dieser betätigt wird oder nicht.

Aus der WO 2008/088534 A2 ist eine Sanitärarmatur bekannt, bei welcher mit einem Hallsensor erfasst wird, ob über einen Griff ein mechanisches Einhebelmischventil geöffnet wird, um dann ein nachgelagertes elektrisches Ventil für eine manuelle Wasserabgabe zu öffnen.

Auch die zuletzt genannten Sanitärarmaturen sind hinsichtlich ihrer Betätigung verbesserungsfähig.

### ZUSAMMENFASSUNG DER ERFINDUNG

Es ist daher Aufgabe der vorliegenden Erfindung, eine Sanitärarmatur anzugeben, die hinsichtlich der Betätigung flexibler ist und eine komfortablere Bedienung ermöglicht. Erfindungsgemäß wird dies durch eine Sanitärarmatur nach Anspruch 1 und ein Ansteuerverfahren nach Anspruch 8 erreicht.

Die Erfinder haben erkannt, dass durch die Verwendung eines Stellungsgebers, der die Stellung des Betätigungselements ermittelt, das normalerweise mechanisch auf die Mischeinrichtung der Sanitärarmatur wirkt, weitere Aktivierungsmodi der Sanitärarmatur bereitgestellt werden können.

Insbesondere kann dabei die für den Bediener ersichtliche Funktionsweise des Betätigungselements verändert werden, je nachdem, ob ausgehend von einem Ruhemodus zuerst das Auslöseelement oder zuerst das Betätigungselement betätigt wurde.

Unter einem Betätigungselement wird dabei ein irgendwie geartetes mehrstufiges Betätigungselement wie beispielsweise ein Drehknopf, ein Schieber oder ein Schwenkhebel verstanden, das mehr als zwei Betätigungszustände einnehmen kann, um eine feinstufige oder kontinuierlich Änderung der Wassertemperatur über die Mischeinrichtung zu ermöglichen.

Im Gegensatz hierzu wird unter einem Auslöseelement ein elektrisches Element verstanden, das im Wesentlichen zwischen zwei Zuständen, betätigt oder nicht betätigt, wechseln kann.

Weiter Vorteile der Erfindung gehen aus den Unteransprüchen und der nachfolgenden Beschreibung hervor.

### KURZE BESCHREIBUNG DER ZEICHNUNGEN

Nachstehend wird die Erfindung anhand eines Ausführungsbeispiels unter Bezugnahme auf die Zeichnungen erläutert. Darin zeigen:
- Fig. 1: eine perspektivische Ansicht einer erfindungsgemäßen Sanitärarmatur mit einem Schwenkhebel;
- Fig. 2: eine schematische Darstellung insbesondere der Komponenten im Inneren der Sanitärarmatur;
- Fig. 3: eine schematische Darstellung eines mit dem Schwenkhebel zusammen arbeitenden Stellungsgebers;
- Fig. 4: ein Flussdiagramm eines Steuerprogramms der Sanitärarmatur;
- Fig. 5: ein Flussdiagramm eines Programmabschnitts "Kurzzeit-/Langzeit-Automatikmodus" des Steuerprogramms;
- Fig. 6: ein Flussdiagramm eines Programmabschnitts "manueller Modus" des Steuerprogramms.

### DETAILLIERTE BESCHREIBUNG EINES BEVORZUGTEN AUSFÜHRUNGSBEISPIELS

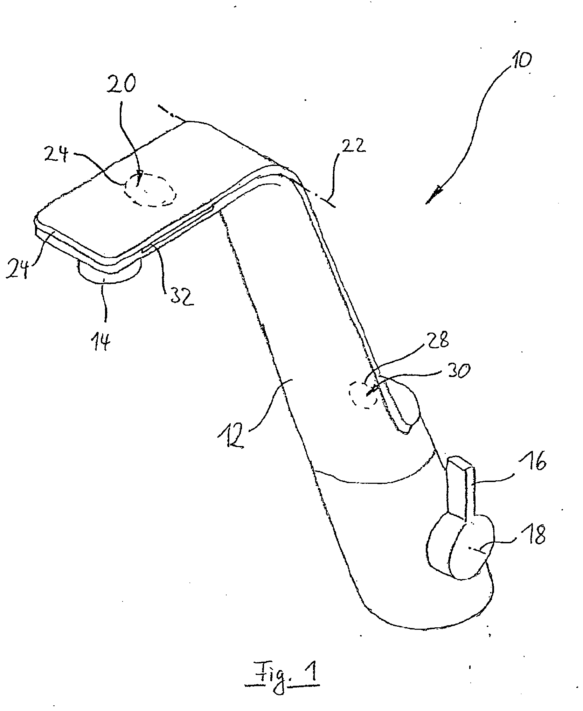

Fig. 1 zeigt eine insgesamt mit 10 bezeichnete Armatur, wie sie beispielsweise in einer Küchenzeile verwendet wird.

Die Sanitärarmatur 10 umfasst einen Armaturengehäuse 12, an dessen oberen Ende einen Auslauf 14 angeordnet ist, aus welchem Wasser unterschiedlicher Temperatur entnommen werden kann. Zur Steuerung der Temperatur des Wassers ist seitlich am Armaturengehäuse 12 ein Schwenkhebel 16 vorgesehen, der sich um eine Drehachse 18 schwenken lässt.

Ferner ist am oberen Ende des Armaturengehäuses 12 ein Auslöseknopf 20 zur Auslösung einer automatischen Wasserabgabe vorgesehen. Der Auslöseknopf 20 ist im hier dargestellten Ausführungsbeispiel über ein um eine Kippachse 22 kippbares Auflageelement 24 des Armaturengehäuses 12 und einen Mikroschalter 24 zwischen dem Armaturenkörper 16 und dem Auflageelement 22 realisiert, der in der Fig. 1 nur durch eine gestrichelte Kreislinie angedeutet ist. Denkbar sind hier jedoch auch andere Betätigungselemente, wie beispielsweise ein kapazitiver Sensor oder ein Näherungsschalter.

Das kippbare Auflageelement 24 kann ferner dazu verwendet werden, an seinem hinteren unteren Bereich einen weiteren Mikroschalter 28 zu betätigen, wodurch ein Spülmaschinenauslöseknopf 30 realisiert wird.

Schließlich ist in Fig. 1 am auskragenden Auslaufende des Armaturengehäuse 12 noch eine Anzeigeeinrichtung 32 gezeigt, deren Funktion weiter unten genauer erläutert wird.

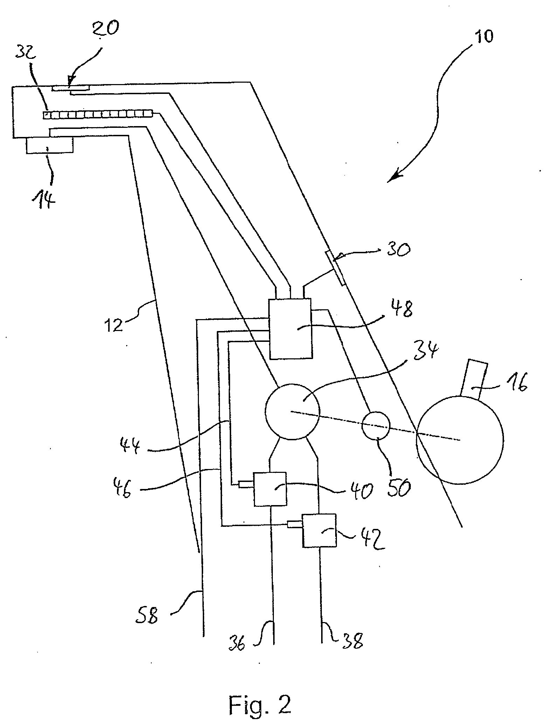

Wie in Fig. 2 über eine strichpunktierte Linie dargestellt ist, wirkt der Schwenkhebel 16 mechanisch auf einen im Inneren des Armaturengehäuses 12 angeordneten Reiber 34 , mit welchem sich das von einem Kaltwasseranschluss 36 und einem Warmwasseranschluss 38 kommende Kalt- und Warmwasser mischen lassen. Derartige Reiber 34 sind allgemein als Mischeinrichtung bekannt, wobei zum Verständnis der vorliegenden Erfindung davon auszugehen ist, dass derartige Reiber 34 üblicherweise nicht dazu geeignet sind, den von den Kalt- und Warmwasseranschlüssen 36 , 38 kommenden Wasserfluss vollständig zu unterbinden. Dies gilt verständlicherweise für ein Verschließen beider Leitungen; es gilt jedoch auch für den vollständigen Verschluss nur einer Leitung.

Die elektrisch betätigbare Sanitärarmatur 10 umfasst daher ferner ein Kaltwasser-Ventil 40 sowie ein Warmwasser-Ventil 42, welche als elektrisch ansteuerbare Magnetventile realisiert und in Strömungsrichtung vor dem Reiber 34 in den entsprechenden Leitungen der Kalt- und Warmwasseranschlüsse 36 und 38 angeordnet sind.

Zur Ansteuerung sind die Kalt- und Warmwasser-Ventile über Steuerleitungen 44 und 46 an eine Steuerelektronik 48 angeschlossen.

Die Steuerelektronik 48 ist über eine nicht gezeigte Versorgungsleitung an eine Stromversorgung am Installationsort der Sanitärarmatur 10 angeschlossen.

Eingangsseitig ist die Steuerelektronik 48 mit dem Auslöseknopf 20 und einem Stellungsgeber 50 verbunden, welcher die Drehstellung des Schwenkhebels 16 um dessen Drehachse 18 erfasst.

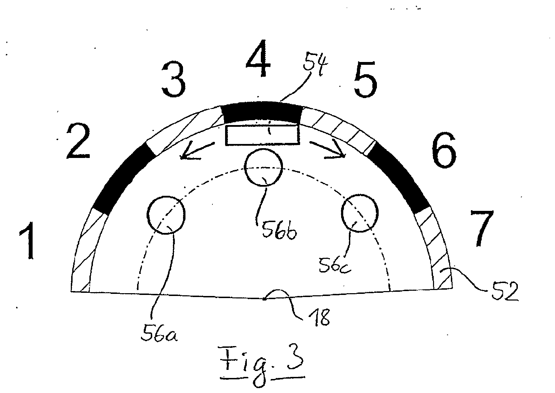

Der Stellungsgeber 50 ist in Figur 3 genauer dargestellt. Diese zeigt schematisch und nur ausschnittsweise einen zylindrischen Gehäuseteil 52 des Schwenkhebels 16. Mit diesem Gehäuseteil 52 ist ein Magnet 54 beispielsweise durch Eingießen verbunden, der sich bei einer Drehung des Schwenkhebels 16 um die Drehachse 18 mit dem Gehäuseteil 52 mitdreht.

Im Inneren des Gehäuseteils 52 sind entlang der Laufbahn des Magneten 54 hier drei Hallsensoren 56a, 56b , 56c angeordnet. Diese Hallsensoren 56a -c sind derart ausgelegt, dass sie zumindest zwischen drei unterschiedlichen, relativen Positionen des Magneten zu sich selbst unterscheiden können. Namentlich sind dies: Magnet direkt vor dem Hallsensor, Magnet seitlich des Hallsensor sowie Magnet nicht in der Nähe des Hallsensors.

In der gezeigten Stellung erfasst der Hallsensor 56b somit den Magneten 54 direkt vor sich und die beiden anderen Hallsensoren 56a und 56c erfassen keine Wirkung des Magneten, was der Drehstellung 4 entspricht.

In der Drehstellung 3 würden hingegen die Hallsensoren 56a und 56b eine seitliche Position des Magneten anzeigen, wohingegen der Hallsensor 56c wiederum die Wirkung des Magneten nicht erfassen würde.

Auf diese Weise lassen sich durch Auslesen der Hallsensoren 56a -c und Vergleichen der verschiedenen Signale über die Steuereinrichtung 48 hier sieben unterschiedliche Drehstellungen des Schwenkhebels 16 ermitteln.

Diese Funktionsweise des Stellungsgebers 50 lässt sich selbstverständlich auch mit einer höheren Anzahl von Hallsensoren 56 realisieren. Es werden jedoch mindestens zwei Hallsensoren 56 benötigt, da der Hallsensor nicht zwischen linker und rechter Seite unterscheiden kann.

Die Steuerelektronik 48 ist ferner noch mit der Anzeigeeinrichtung 32 verbunden, die als eine Zeile von einzeln ansteuerbaren LEDs realisiert ist.

Schließlich ist die Steuerelektronik 48 noch mit dem Spülmaschinenknopf 30 sowie mit einer zugehörigen Steuerleitung 58 zur nicht gezeigten Spülmaschine verbunden.

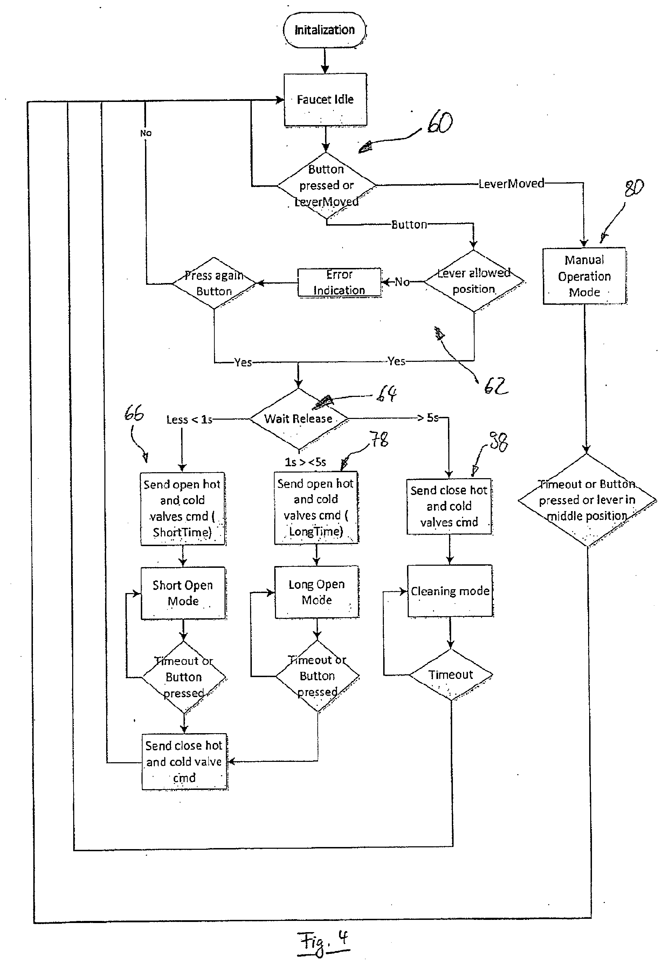

Nachfolgend wird die Funktionsweise der Sanitärarmatur 10 anhand der in den Fig. 4, Fig. 5 und Fig. 6 gezeigten Flussdiagrammen eines Steuerungsprogramms erläutert, welches in der Steuerelektronik 48 fest verdrahtet oder als Software hinterlegt ist.

Wie die Fig. 4 zeigt, wird zunächst das Programm der Sanitärarmatur 10 initialisiert. Die Sanitärarmatur 10 wartet dann in einem Ruhemodus auf eine Betätigung des Auslöseknopfes 20 oder des Schwenkhebels 16 (Schritt 60 ).

Das Betätigen des Auslöseknopfes 20 durch einen Bediener startet einen Automatikmodus, in welchem zunächst überprüft wird, ob sich der Schwenkhebel 16 in einer zulässigen Drehstellung befindet (Schritt 62). Ist dies nicht der Fall, wird mit Hilfe der Anzeigeeinrichtung 32 ein Fehler angezeigt, der durch eine erneute Betätigung des Auslöseknopfes 20 übergangen werden kann. Ansonsten fällt das Programm der Sanitärarmatur 10 in den Ruhemodus zurück.

Bei Betätigen und Halten des Auslöseknopfes 20 beginnt ein Betätigungstimer zu laufen, der erfasst, wie lange der Auslöseknopf 20 vom Bediener betätigt wird. Sobald der Auslöseknopf 20 vom Bediener losgelassen wird, stoppt der Betätigungstimer (Schritt 64).

Beträgt die mit dem Betätigungstimer gemessene Betätigungszeit weniger als 1 Sekunde, insbesondere weniger als 1/10 Sekunde, so springt das Programm der Sanitärarmatur 10 in einen sog. Kurzzeit-Automatikmodus (Schritt 66).

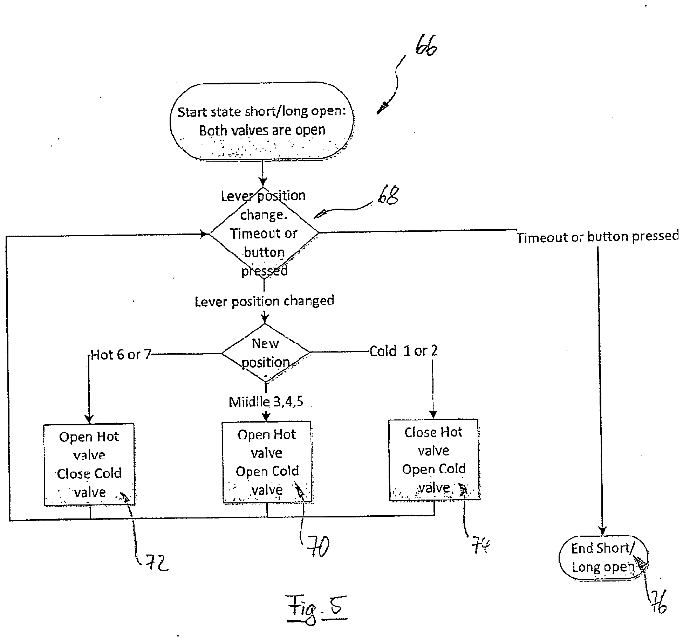

Der weitere Programmablauf des Kurzzeit-Automatikmodus ist in Fig. 5 genauer dargestellt.

Wie aus dem dortigen Flussdiagramm hervorgeht, sind während des Kurzzeit-Automatikmodus sowohl das Kaltwasser-Ventil 40 als auch das Warmwasser-Ventil 42 geöffnet und es läuft eine Abfrage, ob sich die Drehstellung des Schwenkhebels 16 ändert, ob der Auslöseknopf 20 erneut betätigt wird oder ob ein bereits gestarteter Kurzzeit-Timer ausläuft (Schritt 68).

Wird die Drehstellung des Schwenkhebels 16 geändert, wird anhand der neuen Drehstellung zwischen drei möglichen Programmabläufen unterschieden.

Bei der oben beschriebenen Variante des Stellungsgebers 50 mit sieben unterscheidbaren Drehstellungen ist es hier so, dass in einem mittleren Mischbereich der Drehstellung, der hier durch die Drehstellungen 3 , 4 und 5 gebildet wird, weiterhin beide Ventile 40 und 42 offengehalten werden (Schritt 70).

Wird der Schwenkhebel 16 hingegen in einen endständigen Heißbereich geschwenkt, das heißt hier in eine der Drehstellungen 6 oder 7, so wird das Kaltwasser-Ventil 40 vollständig geschlossen und nur das Warmwasser-Ventil 42 bleibt geöffnet (Schritt 72).

Umgekehrt wird das Warmwasser-Ventil 42 geschlossen und das Kaltwasser-Ventil 42 bleibt geöffnet, wenn der Schwenkhebel 16 in einen anderen endständigen Kaltbereich, d. h. die Drehstellungen 1 oder 2, bewegt wird (Schritt 74).

Dementsprechend ist im Kurzzeit-Automatikmodus eine Regelung der Wassertemperatur über den Schwenkhebel 16 nur im mittleren Drehstellungsbereich des Schwenkhebels 16 möglich. In den beiden Heiß- und Kaltbereichen der Drehstellung wird die mechanisch gesteuerte Mischung des Kalt- und Warmwassers über den Reiber 34 somit außer Kraft gesetzt und jeweils vollständig warmes oder vollständig kaltes Wasser abgegeben.

Der Kurzzeit-Automatikmodus wird durch Ablauf des Kurzzeit-Timers oder durch ein erneutes Betätigen des Auslöseknopfes 20 beendet. In diesem Fall werden beide Ventile 40 , 42 geschlossen und das Programm der Sanitärarmatur 10 fällt wieder in den Ruhemodus zurück (Schritt 76).

Zurückkommend auf den Ablaufplan der Fig. 4 wird im Folgenden der Langzeit-Automatikmodus erläutert, der durch Betätigen und Halten des Auslöseknopfes 20 für eine Zeitspanne von einer Sekunde bis fünf Sekunden aktiviert wird. Dabei werden nach und nach fortlaufend mehr LEDs der Anzeigeeinrichtung angeschaltet, sodass die Anzeigeeinrichtung 32 wie eine "Sanduhr" voll läuft, je länger der Bediener den Auslöseknopf 20 betätigt (Schritt 78).

In diesem Fall werden ebenfalls das Kaltwasserventil 40 und das Warmwasserventil 42 geöffnet und ebenfalls der in Fig. 4 gezeigte Programmablauf aktiviert, der vorstehend bereits erläutert wurde. Der Unterschied zum Kurzzeit-Automatikmodus zeigt sich lediglich darin, dass ein Langzeit-Timer aktiviert wird, dessen Länge proportional zu der Haltezeit des Auslöseknopfes 20 gewählt wird. Zudem werden nach und nach die einzelnen LEDs der Anzeigeeinrichtung 32 wieder abgeschaltet, die vorher ein Maß für den Haltezeitraum des Ausleseknopfes 20 darstellten. Die "Sanduhr" läuft somit wieder leer. Sobald der Langzeit-Timer endet bzw. die letzte LED erlischt oder der Auslöseknopf 20 betätigt wird, werden auch hier beide Ventile 40 , 42 geschlossen und das Programm der Sanitärarmatur 10 kehrt wieder in den Ruhemodus zurück (Schritt 76).

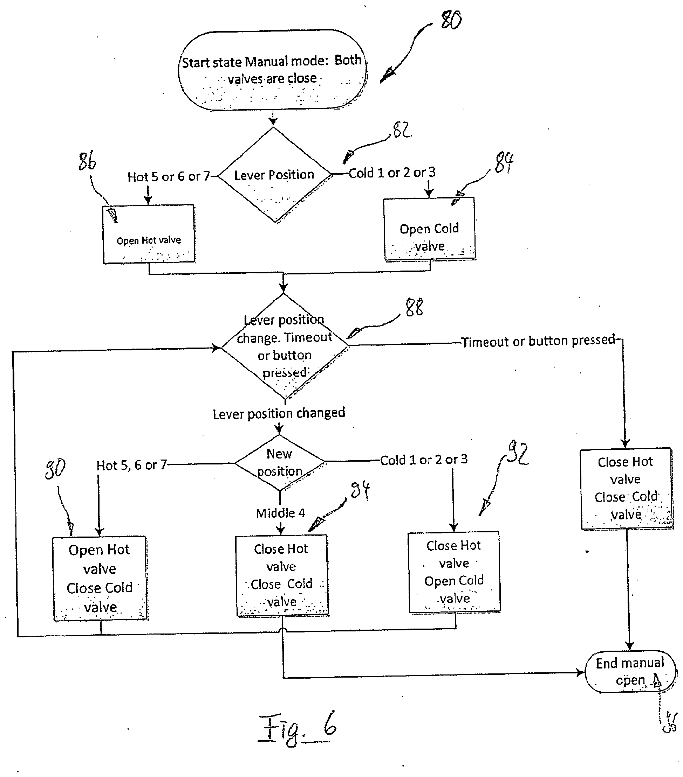

Wird im Ruhemodus der Sanitärarmatur 10 hingegen anstatt des Auslöseknopfes 20 der Schwenkhebel 16 betätigt, so wird ein manueller Betriebsmodus ausgelöst, dessen Ablauf aus dem Flussdiagramm der Fig. 6 hervorgeht (Schritt 80).

In diesem manuellen Betriebsmodus sind zunächst sowohl das Kaltwasserventil 40 als auch das Warmwasserventil 42 geschlossen. Ferner wird über den Stellungsgeber 50 ermittelt, in welcher Drehstellung sich der Schwenkhebel 16 befindet (Schritt 82).

Befindet sich der Schwenkhebel 16 im sog. manuellen Kaltbereich außerhalb der Mittelstellung, d. h. hier in einer der Drehstellungen 1,2 oder 3, so wird nur das Kaltwasser-Ventil 40 geöffnet. Das Warmwasser-Ventil 42 bleibt geschlossen (Schritt 84). Umgekehrt wird bei einer Drehstellung des Schwenkhebels 16 im bezüglich der Mittelstellung gegenüberliegenden, manuellen Heißbereich, d. h. hier in einer der Drehstellungen 5, 6 oder 7, nur das Warmwasser-Ventil 42 geöffnet und das Kaltwasser-Ventil 40 bleibt geschlossen (Schritt 86).

Dementsprechend wird durch Betätigen des Schwenkhebels 16 ohne vorherige Betätigung des Auslöseknopfes 20 direkt nur vollständig kaltes oder vollständig warmes Wasser am Auslauf 14 der Sanitärarmatur 10 abgegeben. Dies ist vor allem bei einer Küchenarmatur von entscheidendem Interesse, da dort häufig sehr kaltes Wasser beispielsweise zum Trinken oder direkt sehr heißes Wasser für ein kurzes Abspülen eines Geschirrs benötigt wird.

Im weiteren Programmablauf des manuellen Betriebsmodus wird überwacht, ob sich die Drehstellung des Schwenkhebels 16 verändert, ein "manueller Modus"-Timer abläuft oder der Auslöseknopf 20 gedrückt wird (Schritt 88).

Wird die Drehstellung geändert, so wird entsprechend dem bereits erläuterten Schema vom manuellen Kaltbereich in den manuellen Heißbereich und umgekehrt gewechselt (Schritt 90 und 92). In der Mittelstellung des Schwenkhebels 16, d. h. hier in der Drehstellung 4, werden hingegen beide Ventile 40 , 42 geschlossen und der manuelle Betriebsmodus beendet (Schritt 94). Gleiches gilt für den Fall, dass der Auslöseknopf 20 betätigt wird oder der "manuelle Modus"-Timer abläuft (Schritt 96).

Diesbezüglich ist zu beachten, dass es für einen Bediener aufgrund der Programmschleife des Ruhezustandes der Sanitärarmatur 10 und bei entsprechend verzögerter Schaltung der Ventile 40 , 42 nicht erkennbar ist, dass beim Durchtritt des Schwenkhebels 16 durch die Mittelstellung im Prinzip der manuelle Betriebsmodus verlassen wird und durch Übergang in einen der anderen Bereiche, d. h. Drehstellung 1 , 2 , 3 oder Drehstellung 5, 6, 7 erneut der entsprechende manuelle Betriebsmodus ausgelöst wird.

Schließlich ist im Flussdiagramm der Fig. 4 noch ein Reinigungsmodus vorgesehen, der durch Betätigen und Halten des Auslöseknopfes 16 für einen Zeitraum von mehr als 5 Sekunden aktiviert wird (Schritt 98).

In diesem Modus werden beide Ventile 40, 42 geschlossen und ein Reinigungstimer aktiviert, der den Reinigungsmodus für eine vorgegebene Zeit, beispielsweise eine Minute, beibehält. Im Reinigungsmodus werden ansonsten keine Signale vom Schwenkhebel 16 oder vom Auslöseknopf 20 entgegengenommen, so dass ein Bediener zur Außenreinigung der Sanitärarmatur 10 den Schwenkhebel 16 in sämtliche Drehstellungen bewegen kann, ohne dass dabei die Wasserabgabe aktiviert wird.

Im Hinblick auf den Spülmaschinenknopf 30 ist in der Steuerelektronik 48 noch eine separate Verdrahtung oder ein paralleler Programmablauf vorgesehen, der zur Überwachung des Spülmaschinenknopfes 30 dient und entsprechende Signale an die Steuerleitung 58 übergibt, um die Spülmaschine bei einer Betätigung zu aktivieren.

## Patentansprüche

1. Sanitärarmatur (10) mit
a) einer Mischeinrichtung (34), die über ein Kaltwasser-Ventil (40) mit einem Kaltwasseranschluss (36), über ein Warmwasser-Ventil (42) mit einem Warmwasseranschluss (38) sowie mit einem Auslauf (14) verbunden ist,
b) einem Betätigungselement (16), das zum Ändern der Wassertemperatur des am Auslauf (14) bereitgestellten Wassers mechanisch auf die Mischeinrichtung (34) einwirkt,
c) einem Auslöseelement (20) und
d) einer elektrischen Steuereinrichtung (48), die mit dem Kaltwasser-Ventil (40), Warmwasser-Ventil (42) und dem Auslöseelement (20) verbunden ist, um im Bedarfsfall die Wasserabgabe auszulösen,
**dadurch gekennzeichnet, dass**
e) ein Stellungsgeber (50) vorgesehen ist, der mit der Steuereinrichtung (48) verbunden ist und mit dem Betätigungselement (16) zusammenarbeitet, um dessen Stellung (1 -7) zu erfassen,
f) die Steuereinrichtung (48) dazu eingerichtet ist:
- zu erfassen, ob ausgehend von einem Ruhemodus zuerst das Auslöseelement (20) oder zuerst das Betätigungselement (16) betätigt wird, und
- bei einer Betätigung des Auslöseelements (20) Wasser abzugeben, wobei dem Bediener eine Änderung der Wassertemperatur über das Betätigungselement (16) mit Hilfe der Mischeinrichtung (34) ermöglicht wird, oder
- bei einer Betätigung des Betätigungselements (16) zum Ändern der Wassertemperatur Wasser abzugeben, wobei der Bediener durch Betätigen des Betätigungselements (16) nur zwischen vollständig kaltem oder vollständig warmem Wasser wählen kann.

2. Sanitärarmatur nach Anspruch 1, **dadurch gekennzeichnet, dass** die Steuereinrichtung (48) dazu eingerichtet ist, in Abhängigkeit der Stellung (1-7) des Betätigungselements (16) unterschiedliche Abgabemodi zu aktivieren.

3. Sanitärarmatur nach einem der vorhergehenden Ansprüche, **dadurch gekennzeichnet, dass** die Steuereinrichtung (48) dazu eingerichtet ist, bei einer Betätigung des Betätigungselements (16) einen manuellen Modus (Schritt 80) zu aktivieren, in welchem,
a) falls sich das Betätigungselement (16) in einem Heißbereich (5, 6, 7) befindet, das Kaltwasser-Ventil (40) geschlossen wird und das Warmwasser-Ventil (42) geöffnet wird,
b) falls sich das Betätigungselement (16) in einem Kaltbereich (1, 2, 3) befindet, das Kaltwasser-Ventil (40) geöffnet wird und das Warmwasser-Ventil (42) geschlossen wird,
c) falls sich das Betätigungselement in einer Mittelstellung (4) befindet, das Kaltwasser-Ventil (40) und das Warmwasser-Ventil (42) geschlossen werden.

4. Sanitärarmatur nach einem der vorhergehenden Ansprüche, **dadurch gekennzeichnet, dass** die Steuereinrichtung (48) dazu eingerichtet ist, bei einer Betätigung des Auslöseelements (20) einen Automatikmodus zu aktivieren, in welchem,
a) falls sich das Betätigungselement in einem mittleren Mischstellungsbereich (3, 4, 5) befindet, das Kaltwasser-Ventil (40) und das Warmwasser-Ventil (42) geöffnet werden.

5. Sanitärarmatur nach Anspruch 4, **dadurch gekennzeichnet, dass** die Steuereinrichtung dazu eingerichtet ist, im Automatikmodus ferner,
a) falls sich das Betätigungselement in einem endständigen Heißbereich (6, 7) befindet, das Kaltwasser-Ventil (40) geschlossen wird und das Warmwasser-Ventil (42) geöffnet wird,
b) falls sich das Betätigungselement in einem endständigen Kaltbereich (1, 2) befindet, das Kaltwasser-Ventil (40) geöffnet wird und das Warmwasser-Ventil (42) geschlossen wird.

6. Sanitärarmatur nach einem der vorhergehenden Ansprüche, **dadurch gekennzeichnet, dass** die Steuereinrichtung (48) dazu eingerichtet ist, in Abhängigkeit der Zeitdauer der Betätigung des Auslöseelements (20) zwischen einem Kurzzeit-Automatikmodus (Schritt 66), einem Langzeit-Automatikmodus (Schritt 78) und einem Reinigungsmodus (Schritt 98) zu unterscheiden.

7. Sanitärarmatur nach einem der vorhergehenden Ansprüche, **dadurch gekennzeichnet, dass** der Stellungsgeber (50) einen am Betätigungselement (16) befestigten Magneten (54) sowie mindestens zwei Hallsensoren (56a, 56b, 56c) zur Erfassung der Position des Magneten (54) umfasst, die so angeordnet sind, dass der Stellungsgeber (50) mindestens 3 unterschiedliche Stellungen des Betätigungselements (16) unterscheiden kann.

8. Ansteuerverfahren für eine Sanitärarmatur (10), die
a) eine Mischeinrichtung (34), die über ein Warmwasser-Ventil (42) mit einem Warmwasseranschluss (36), über ein Kaltwasser-Ventil (40) mit einem Kaltwasseranschluss (38) sowie mit einem Auslauf (14) verbunden ist,
b) ein Betätigungselement (16), das zum Ändern der Wassertemperatur des am Auslauf (14) bereitgestellten Wassers mechanisch auf die Mischeinrichtung (34) einwirkt, und
c) ein Auslöseelement (20) und
d) eine Steuereinrichtung (48) aufweist, die mit dem Kaltwasser-Ventil (40), dem Warmwasserventil (42) und dem Auslöseelement (20) verbunden ist, um im Bedarfsfall die Wasserabgabe auszulösen,
mit folgenden Schritten:
e) Erfassen, ob ausgehend von einem Ruhemodus zuerst das Auslöseelement (20) oder zuerst das Betätigungselement (16) betätigt wird, wozu mit einem Stellungsgeber (50) die Stellung (1-7) des Betätigungselements (16) erfasst wird;
ee) Bei einer Betätigung des Auslöseelements (20) Abgeben von Wasser, wobei dem Bediener eine Änderung der Wassertemperatur über das Betätigungselement (16) mit Hilfe der Mischeinrichtung (34) ermöglicht wird;
ef) Bei einer Betätigung des Betätigungselements (16) zum Ändern der Wassertemperatur Abgeben von Wasser, wobei der Bediener durch Betätigen des Betätigungselements (16) nur zwischen vollständig kaltem oder vollständig warmem Wasser wählen kann.

## Claims

1. A sanitary fitting (10) comprising
a) a mixing device (34), which is connected to a cold water connection (36) via a cold water valve (40), connected to a warm water connection (38) via a warm water valve (42) as well as connected to an outlet (14),
b) an actuating element (16), which acts mechanically on the mixing device (34) for changing the water temperature of the water provided at the outlet (14),
c) a release element (20), and
d) an electric control device (48), which is connected to the cold water valve (40), the warm water valve (42) and the release element (20), in order to trigger release of the water in case of need,
**characterized in that**
e) a position sensor (50) is provided, which is connected to the control device (48), and cooperates with the actuating element (16) in order to detect its position (1 to 7),
f) the control device (48) is adapted to :
- detect, if, starting from an idle mode, the release element (20) is actuated first or the actuating element (16) is actuated first, and
- to release water when the release element (20) is actuated, wherein the operator is allowed to change the water temperature via the actuating element (16) by means of the mixing device (34), or
- to release water when the actuating element (16) is actuated for changing the water temperature, wherein the operator, by actuating the actuating element (16), can select only between entirely cold or entirely warm water.

2. The sanitary fitting according to patent claim 1, **characterized in that** the control device (48) is adapted to activate different release modes depending on the position (1 to 7) of the actuating element (16).

3. The sanitary fitting according to any one of the preceding patent claims, **characterized in that** the control device (48) is adapted to activate a manual mode (step 80), when the actuating element (16) is actuated, in which mode
a) if the actuating element (16) is within a high temperature range (5, 6, 7), the cold water valve (40) is closed, and the warm water valve (42) is opened,
b) if the actuating element (16) is within a low temperature range (1, 2, 3), the cold water valve (40) is opened and the warm water valve (42) is closed,
c) if the actuating element is at a mid-position (4), the cold water valve (40) and the warm water valve (42) are closed.

4. The sanitary fitting according to any one of the preceding patent claims, **characterized in that** the control device (48) is adapted to activate an automatic mode, when the release element (20) is actuated, in which mode
a) if the actuating element is at a medium mixing position range (3, 4, 5), the cold water valve (40) and the warm water valve (42) are opened.

5. The sanitary fitting according to patent claim 4, **characterized in that** the control device (48) is adapted, in the automatic mode, moreover
a) if the actuating element is at a terminal high temperature range (6, 7), the cold water valve (40) is closed and the warm water valve (42) is opened,
b) if the actuating element is at a terminal low temperature range (1, 2), the cold water valve (40) is opened and the warm water valve (42) is closed.

6. The sanitary fitting according to any one of the preceding patent claims, **characterized in that** the control device (48) is adapted, as a function of the duration of the actuation of the release element (20), to distinguish between a short time automatic mode (step 66), a long time automatic mode (step 78) and a cleaning mode (step 98).

7. The sanitary fitting according to any one of the preceding patent claims, **characterized in that** the position sensor (50) comprises a magnet (54), attached to the actuating element (16), as well as at least two Hall sensors (56a, 56b, 56c) for detecting the position of the magnet (54), which sensors are located in such a way that the position sensor (50) can distinguish at least 3 different positions of the actuating element (16).

8. A control method for a sanitary fitting (10) which comprises
a) a mixing device (34), which is connected to a warm water connection (36) via a warm water valve (42), connected to a cold water connection (38) via a cold water valve (40) as well as connected to an outlet (14),
b) an actuating element (16), which acts mechanically on the mixing device (34) for changing the water temperature of the water provided at the outlet (14), and
c) a release element (20), and
d) a control device (48), which is connected to the cold water valve (40), the warm water valve (42) and the release element (20), in order to trigger release of the water in case of need,
with the following steps :
e) detecting, if, starting from an idle mode, the release element (20) is actuated first or the actuating element (16) is actuated first, for which purpose the position (1 to 7) of the actuating element (16) is detected by means of a position sensor (50);
ee) releasing water, when the release element (20) is actuated, wherein the operator is allowed to change the water temperature via the actuating element (16) by means of the mixing device (34);
ef) releasing water, when the actuating element (16) is actuated for changing the water temperature, wherein the operator can only select between entirely cold or entirely warm water by actuating the actuating element (16).

## Revendications

1. Robinetterie (10) comprenant
a) un dispositif de mélange (34), qui est relié par une vanne d'eau froide (40) à un raccord d'eau froide (36), par une vanne d'eau chaude (42) à un raccord d'eau chaude (38), ainsi qu'à un bec verseur (14),
b) un élément d'actionnement (16), qui agit mécaniquement sur le dispositif de mélange (34) pour changer la température de l'eau mise à disposition au bec verseur (14),
c) un élément déclencheur (20) et
d) un dispositif de commande électrique (48), qui est relié à la vanne d'eau froide (40), à la vanne d'eau chaude (42) et à l'élément déclencheur (20) pour déclencher la distribution d'eau en cas de besoin,
**caractérisé en ce que**
e) un transmetteur de position (50) est prévu, qui est relié au dispositif de commande (48), et qui coopère avec l'élément d'actionnement (16), afin de détecter sa position (1 à 7),
f) le dispositif de commande (48) est adapté :
- pour détecter si, à partir d'un mode de repos, l'élément déclencheur (20) est actionné en premier ou si l'élément d'actionnement (16) est actionné en premier, et,
- en cas d'actionnement de l'élément déclencheur (20), pour distribuer de l'eau, dans lequel l'utilisateur est autorisé à changer la température de l'eau par l'intermédiaire de l'élément d'actionnement (16) à l'aide du dispositif de mélange (34), ou
- en cas d'actionnement de l'élément d'actionnement (16) pour changer la température de l'eau, pour distribuer de l'eau, dans lequel l'utilisateur peut choisir, en actionnant l'élément d'actionnement (16), uniquement entre de l'eau entièrement froide ou de l'eau entièrement chaude.

2. Robinetterie selon la revendication 1, **caractérisé en ce que** le dispositif de commande (48) est adapté pour activer des différents modes de distribution en fonction de la position (1 à 7) de l'élément d'actionnement (16).

3. Robinetterie selon l'une quelconque des revendications précédentes, **caractérisé en ce que** le dispositif de commande (48) est adapté pour activer un mode manuel (pas 80) en cas d'actionnement de l'élément d'actionnement (16), dans lequel,
a) si l'élément d'actionnement (16) se trouve dans une plage chaude (5, 6, 7), la vanne d'eau froide (40) est fermée et la vanne d'eau chaude (42) est ouverte,
b) si l'élément d'actionnement (16) se trouve dans une plage froide (1, 2, 3), la vanne d'eau froide (40) est ouverte et la vanne d'eau chaude (42) est fermée,
c) si l'élément d'actionnement se trouve dans une position médiane (4), la vanne d'eau froide (40) et la vanne d'eau chaude (42) sont fermées.

4. Robinetterie selon l'une quelconque des revendications précédentes, **caractérisé en ce que** le dispositif de commande (48) est adapté pour activer un mode automatique en cas d'actionnement de l'élément déclencheur (20), dans lequel,
a) si l'élément d'actionnement se trouve dans une plage de position de mélange intermédiaire (3, 4, 5), la vanne d'eau froide (40) et la vanne d'eau chaude (42) sont ouvertes.

5. Robinetterie selon la revendication 4, **caractérisé en ce que** le dispositif de commande (48) est adapté, dans le mode automatique, en outre
a) si l'élément d'actionnement se trouve dans une plage chaude terminale (6, 7), pour fermer la vanne d'eau froide (40) et pour ouvrir la vanne d'eau chaude (42),
b) si l'élément d'actionnement se trouve dans une plage froide terminale (1, 2), pour ouvrir la vanne d'eau froide (40) et pour fermer la vanne d'eau chaude (42).

6. Robinetterie selon l'une quelconque des revendications précédentes, **caractérisé en ce que** le dispositif de commande (48) est adapté pour distinguer, en fonction de la durée d'actionnement de l'élément déclencheur (20), entre un mode automatique de courte durée (pas 66), un mode automatique de longue durée (pas 78) et un mode de nettoyage (pas 98).

7. Robinetterie selon l'une quelconque des revendications précédentes, **caractérisé en ce que** le transmetteur de position (50) comporte un aimant (54), fixé à l'élément d'actionnement (16), ainsi qu'au moins deux capteurs de Hall (56a, 56b, 56c), pour détecter la position de l'aimant (54), qui sont agencés de manière à ce que le transmetteur de position (50) puisse distinguer au moins 3 positions différentes de l'élément d'actionnement (16).

8. Procédé de pilotage pour une robinetterie (10) qui comporte
a) un dispositif de mélange (34), qui est relié par une vanne d'eau chaude (42) à un raccord d'eau chaude (36), par une vanne d'eau froide (40) à un raccord d'eau froide (38), ainsi qu'à un bec verseur (14),
b) un élément d'actionnement (16), qui agit mécaniquement sur le dispositif de mélange (34) pour changer la température de l'eau mise à disposition au bec verseur (14), et
c) un élément déclencheur (20), et
d) un dispositif de commande (48), qui est relié à la vanne d'eau froide (40), à la vanne d'eau chaude (42) et à l'élément déclencheur (20) pour déclencher la distribution d'eau en cas de besoin,
avec les étapes suivantes :
e) détecter si, à partir d'un mode de repos, l'élément déclencheur (20) est actionné en premier ou si l'élément d'actionnement (16) est actionné en premier, c'est pourquoi la position (1 à 7) de l'élément d'actionnement (16) est détectée par l'intermédiaire d'un transmetteur de position (50) ;
ee) en cas d'actionnement de l'élément déclencheur (20), distribuer de l'eau, dans lequel l'utilisateur est autorisé à changer la température de l'eau par l'intermédiaire de l'élément d'actionnement (16) à l'aide du dispositif de mélange (34) ;
ef) en cas d'actionnement de l'élément d'actionnement (16) pour changer la température de l'eau, distribuer de l'eau, dans lequel l'utilisateur peut choisir, en actionnant l'élément d'actionnement (16), uniquement entre de l'eau entièrement froide ou de l'eau entièrement chaude.
